# EUROPEAN PATENT APPLICATION

(11) **EP 4 459 690 A1**
(43) Date of publication of application: **06.11.2024**
(21) Application number: 21969409.8
(22) Date of filing: 29.12.2021
(51) Int. Cl.: H01M 4/13, H01M 10/058, H01M 10/0525, H01M 50/536

(54) **ELECTROCHEMICAL DEVICE AND ELECTRONIC DEVICE**

(71) Applicant: Dongguan Amperex Technology Limited, Dongguan City, Guangdong Province 523000 (CN)
(72) Inventor: YAN, Dongyang, Dongguan, Guangdong 523000 (CN)
(74) Representative: Klunker IP Patentanwälte PartG mbB
(86) International application number: PCT/CN2021/142421
(87) International publication number: WO 2023/123034

(57) **Abstract**

An electrochemical apparatus is provided, including a housing, an electrode assembly, and a conductive plate. The electrode assembly is disposed in the housing. The conductive plate is electrically connected to the electrode assembly and extends out from the housing. The electrochemical apparatus further includes a first layer, where an extending direction of the conductive plate is a first direction, and in the first direction, the first layer includes a first region and a second region connected to each other, the first region being disposed inside the housing, and the second region being disposed outside the housing. A direction perpendicular to a surface of the conductive plate is a second direction, and viewed along the second direction, the second region partially overlaps the conductive plate. The second region includes a first protrusion and a second protrusion. Viewed along the second direction, the first protrusion partially overlaps the conductive plate and protrudes along the first direction, and the second protrusion partially overlaps the conductive plate and protrudes along the first direction. In a third direction, the first protrusion is separated from the second protrusion. This application further provides an electronic apparatus. This application has improved hermeticity and service life.

## Description

### TECHNICAL FIELD

This application relates to the field of energy storage technologies, and in particular, to an electrochemical apparatus and an electronic apparatus containing such electrochemical apparatus.

### BACKGROUND

Electrochemical apparatuses (such as batteries) are widely used in electronic products such as electronic mobile devices, electric tools, and electric vehicles, and people have increasingly high requirements for the electrochemical apparatuses.

During preparation of an electrochemical apparatus, an upper housing and a lower housing need to be sealed to form an accommodating space for accommodating an electrode assembly and an electrolyte, and a conductive plate electrically connected to the electrode assembly extends out from the housing. However, the housing may have the problem of reduced airtightness at the position where the conductive plate extends. When mechanical abuse (dropping, collision, and vibration) occurs, the housing may experience electrolyte leakage, reducing service life of the product.

### SUMMARY

In view of the shortcomings of the prior art, it is necessary to propose an electrochemical apparatus having improved hermeticity.

In addition, it is also necessary to provide an electronic apparatus containing such electrochemical apparatus.

This application provides an electrochemical apparatus including a housing, an electrode assembly, and a first conductive plate. The electrode assembly is disposed in the housing, and the first conductive plate is electrically connected to the electrode assembly and extends out from the housing. The electrochemical apparatus further includes a first layer, where an extending direction of the first conductive plate is defined as a first direction, and in the first direction, the first layer includes a first region and a second region connected to each other, the first region being disposed inside the housing, and the second region being disposed outside the housing. A direction perpendicular to a surface of the first conductive plate is defined as a second direction, and viewed along the second direction, the second region partially overlaps the first conductive plate. The first layer includes an insulating material. The second region includes a first protrusion and a second protrusion. Viewed along the second direction, the first protrusion partially overlaps the first conductive plate and protrudes along the first direction, and the second protrusion partially overlaps the first conductive plate and protrudes along the first direction. It is defined that a third direction, the first direction, and the second direction are perpendicular to each other, and in the third direction, the first protrusion is separated from the second protrusion.

In this application, the first protrusion and the second protrusion are disposed on the first layer, such that when mechanical abuse occurs, stress generated by the first layer can be dispersed along the extending direction of the first protrusion and the second protrusion, which not only is conducive to reducing the possibility of the first layer being separated from the first conductive plate, but also improves hermeticity of the first layer, thereby improving service life of the electrochemical apparatus. In addition, this is also conducive to reducing the possibility of dissolution of transition metal ions from a positive electrode conductive layer due to reduced hermeticity of the first layer and moisture entering the housing, improving storage performance and cycling performance of the electrochemical apparatus. Moreover, the first protrusion and the second protrusion increase a contact area between the first layer and the first conductive plate, so when the first conductive plate is charged to generate heat, the first protrusion and the second protrusion improve heat dissipation efficiency of the first layer, thereby alleviating deterioration of the first layer due to frequent temperature changes, also helping improve the hermeticity of the first layer.

In some possible implementations, viewed along the second direction, the second region further includes a third protrusion disposed between the first protrusion and the second protrusion, the third protrusion protruding along the first direction. The third protrusion further increases the contact area between the first layer and the first conductive plate, which further improves the heat dissipation efficiency of the first layer, thereby improving the hermeticity of the first layer.

In some possible implementations, viewed along the second direction, the housing includes a first edge disposed between the first region and the second region. In the first direction, a distance from the first edge to an apex of the first protrusion is defined as a first distance, and a distance from the first edge to an apex of the third protrusion is defined as a second distance, the first distance being greater than the second distance. Therefore, the first protrusion can well disperse the stress and improve the heat dissipation effect, and help improve the situation of small thickness of the first region connected to a surface of the first conductive plate correspondingly caused by the third protrusion extending by a large distance, thereby reducing influence on the hermeticity of the first layer.

In some possible implementations, the third protrusion is provided in plurality.

In some possible implementations, viewed along the second direction, a portion of the second region overlapping the first conductive plate is defined as an overlapping region. The overlapping region includes a fourth protrusion, the fourth protrusion protruding along the second direction. Therefore, when the first conductive plate needs to be bent, the fourth protrusion can reduce the possibility of short circuit or corrosion caused by direct contact between the first conductive plate and a metal layer exposed from an edge of the first edge.

In some possible implementations, the first layer includes a second edge, the second edge extending along the third direction. In the third direction, the first protrusion is disposed between the second edge and the second protrusion. In the first direction, a distance from the first edge to the second edge is a third distance, the first distance being greater than the third distance. Therefore, the first protrusion can well disperse the stress and improve the heat dissipation effect, and improve the situation of small thickness of the first region connected to a side face of the first conductive plate correspondingly caused by the first edge extending by a large distance, thereby reducing influence on the hermeticity of the first layer.

In some possible implementations, the second distance is greater than the third distance.

In some possible implementations, the third distance ranges from 0.2 mm to 3.5 mm, and a ratio of the first distance to the third distance ranges from 1.09 to 16. In this application, limiting the range of the third distance reduces the possibility of reduced hermeticity of the first layer caused by the first edge extending by a small distance (insufficient pressure applied to the first layer by the sealing head), and reduces influence on the hermeticity of the first layer when the first edge extends by a large distance. Limiting an upper limit of the third distance can also reduce the possibility of breakage of the first layer after bent. In addition, in this application, limiting the range of the ratio of the first distance to the third distance alleviates the problem of reduced stress dispersion effect and heat dissipation effect when the first distance is small, and reduces influence on energy density of the electrochemical apparatus when the first distance is large.

In some possible implementations, viewed along the second direction, the first conductive plate includes a first side face and a second side face facing away from each other. In the first direction, the apex of the first protrusion overlaps the first side face, and the apex of the second protrusion overlaps the second side face.

In some possible implementations, the housing includes a body portion and a connecting portion connected to the body portion, where the connecting portion is configured to seal the body portion. The electrode assembly is disposed in the body portion. The first conductive plate is electrically connected to the electrode assembly and extends from the connecting portion. The first region connects the first conductive plate and the connecting portion. Therefore, the first region can be used to seal a gap between the first conductive plate and the connecting portion, reducing the possibility of electrolyte leakage.

In some possible implementations, the housing includes a first housing and a second housing disposed opposite to each other. The first housing includes a first polymer layer, the second housing includes a second polymer layer, and the first polymer layer and the second polymer layer are bonded to each other to form the connecting portion, so as to achieve sealing. In addition, the first polymer layer and the second polymer layer can also reduce the possibility of the housing being dissolved or swelled by an organic solvent in the electrolyte.

In some possible implementations, the first polymer layer includes a first polymer material, the second polymer layer includes a second polymer material, and the first polymer material and the second polymer material are each independently at least one selected from polypropylene, propylene copolymer, polyethylene, or polymethyl methacrylate.

In some possible implementations, the first layer further includes a third region. In the first direction, the first region is connected between the second region and the third region, and the third region is disposed in the body portion. The third region includes a fifth protrusion and a sixth protrusion. Viewed along the second direction, the fifth protrusion partially overlaps the first conductive plate and protrudes along a direction opposite to the first direction, and the sixth protrusion partially overlaps the first conductive plate and protrudes along a direction opposite to the first direction. In the third direction, the fifth protrusion is separated from the sixth protrusion. Therefore, when mechanical abuse occurs, the fifth protrusion and the sixth protrusion can disperse the stress generated by the first layer, and can improve the heat dissipation efficiency of the first layer, thereby improving the hermeticity of the first layer.

In some possible implementations, the insulating material is at least one selected from polypropylene, polyethylene, polyethylene glycol terephthalate, polyethylene naphthalate, a polypropylene-modified material, or a polyethylene-modified material.

This application further provides an electronic apparatus, including the electrochemical apparatus.

### BRIEF DESCRIPTION OF DRAWINGS

FIG. 1 is a three-dimensional view of an electrochemical apparatus according to an embodiment of this application.
FIG. 2 is a front view of the electrochemical apparatus shown in FIG. 1.
FIG. 3 is a back view of the electrochemical apparatus shown in FIG. 1.
FIG. 4 is a partially enlarged view of the electrochemical apparatus shown in FIG. 2 at position A.
FIG. 5 is a cross-sectional view of the electrochemical apparatus shown in FIG. 2 along line V-V.
FIG. 6 is a cross-sectional view of the electrochemical apparatus shown in FIG. 2 along line VI-VI.
FIG. 7 is a cross-sectional view of the electrochemical apparatus shown in FIG. 2 in some other embodiments.
FIG. 8 is a cross-sectional view of the electrochemical apparatus shown in FIG. 5 with a first conductive plate connected to a circuit board.
FIG. 9A is a cross-sectional view of the electrochemical apparatus shown in FIG. 2 along line VIII-VIII.
FIG. 9B is a schematic structural diagram of a first layer of the electrochemical apparatus shown in FIG. 2.
FIG. 10 is a top view of an electrode assembly of the electrochemical apparatus shown in FIG. 2 in some embodiments.
FIG. 11 is a schematic structural diagram of the electrochemical apparatus shown in FIG. 1 before sealing.
FIG. 12 is a partially cross-sectional view of a first housing of the electrochemical apparatus shown in FIG. 11.
FIG. 13 is a partially cross-sectional view of a second housing of the electrochemical apparatus shown in FIG. 11.
FIG. 14 is a front view of an electrochemical apparatus according to another embodiment of this application.
FIG. 15 is a partially enlarged view of the electrochemical apparatus shown in FIG. 14 at position B.
FIG. 16 is a schematic structural diagram of an electronic apparatus according to an embodiment of this application.

### Reference signs of main components:

| | |
|---|---|
| electronic apparatus | 1 |
| housing | 10 |
| body portion | 11 |
| connecting portion | 12 |
| first connecting region | 12a |
| second connecting region | 12b |
| third connecting region | 12c |
| electrode assembly | 20 |
| first electrode plate | 21 |
| second electrode plate | 22 |
| separator | 23 |
| first tab | 24 |
| second tab | 25 |
| first conductive plate | 30 |
| first conductive region | 31 |
| second conductive region | 32 |
| third conductive region | 33 |
| second conductive plate | 40 |
| first layer | 50 |
| substrate | 50a |
| first adhesive layer | 50b |
| second adhesive layer | 50c |
| first region | 51 |
| second region | 52 |
| third region | 53 |
| second edge | 54 |
| second layer | 60 |
| circuit board | 70 |
| first electrically connecting member | 71 |
| bonding member | 72 |
| electrochemical apparatus | 100, 200 |
| first housing | 101 |
| first portion | 101a |
| second portion | 101b |
| second housing | 102 |
| third portion | 102a |
| fourth portion | 102b |
| first end wall | 111 |
| second end wall | 112 |
| first side wall | 113 |
| second side wall | 114 |
| third side wall | 115 |
| fourth side wall | 116 |
| first edge | 121 |
| first conductive layer | 210 |
| first conductive material layer | 211 |
| second conductive layer | 220 |
| second conductive material layer | 221 |
| first adapting portion | 240 |
| second adapting portion | 250 |
| first included angle region | 300 |
| first surface | 301 |
| second surface | 302 |
| first side face | 303 |
| second side face | 304 |
| first segment | 331 |
| second segment | 332 |
| third segment | 333 |
| second included angle region | 500 |
| first end edge | 501 |
| second end edge | 502 |
| third end edge | 503 |
| fourth end edge | 504 |
| overlapping region | 520 |
| first protrusion | 521 |
| second protrusion | 522 |
| third protrusion | 523 |
| fourth protrusion | 524 |
| fifth protrusion | 531 |
| sixth protrusion | 532 |
| first protective layer | 1011 |
| first metal layer | 1012 |
| first polymer layer | 1013 |
| second protective layer | 1021 |
| second metal layer | 1022 |
| second polymer layer | 1023 |
| first end face | 1111 |
| second end face | 1121 |
| third end face | 1112 |
| fourth end face | 1122 |
| first side surface | 1131 |
| second side surface | 1141 |
| third side surface | 1132 |
| fourth side surface | 1142 |
| first direction | X |
| second direction | Y |
| third direction | Z |
| first distance | H₁ |
| second distance | H₂ |
| third distance | H₃ |
| fourth distance | H₄ |
| apex | T₁, T₂, T₃ |

This application will be further described with reference to the accompanying drawings in the following specific embodiments.

### DETAILED DESCRIPTION

The following clearly and in detail describes the technical solutions in some embodiments of this application. Apparently, the described embodiments are only some rather than all of the embodiments of this application. Unless otherwise defined, all technical and scientific terms used herein shall have the same meanings as commonly understood by persons skilled in the art to which this application belongs. The terms used in the specification of this application are for description of specific embodiments only without any intention to limit this application.

The following describes some embodiments of this application in detail. However, this application may be embodied in many different implementations and should not be construed as being limited to the example embodiments set forth herein. Rather, these example embodiments are provided such that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" in the descriptions of some embodiments of this application means "one or more embodiments of this application".

The terminology used herein is merely intended to describe specific embodiments but not intended to constitute any limitation on this application. As used herein, the singular forms are intended to also include the plural forms, unless otherwise clearly stated in the context. It should be further understood that the term "include", when used in this specification, specifies the presence of stated features, numbers, steps, operations, elements, and/or components but does not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of a device or an apparatus in use or operation in addition to the directions described in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

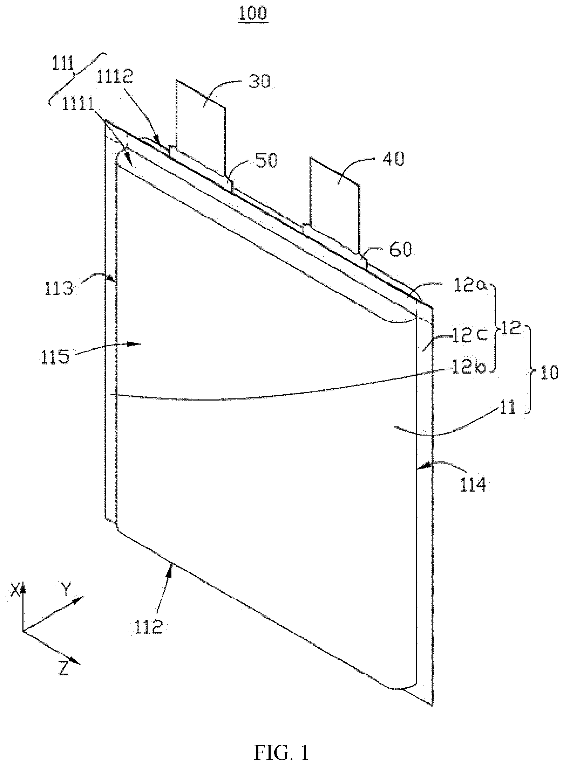

Referring to FIG. 1 to FIG. 3, an embodiment of this application provides an electrochemical apparatus 100 including a housing 10, an electrode assembly 20, a first conductive plate 30, and a second conductive plate 40. The electrode assembly 20 is disposed in the housing 10. Both the first conductive plate 30 and the second conductive plate 40 are electrically connected to the electrode assembly 20 and extend out from the housing 10. The first conductive plate 30 and the second conductive plate 40 may be connected to an external element (not shown in the figure). A first direction X, a second direction Y, and a third direction Z are defined to be perpendicular to each other. An extending direction of the first conductive plate 30 is the first direction X. A direction perpendicular to a first surface of the first conductive plate 30 is the second direction Y A direction from the first conductive plate 30 to the second conductive plate 40 is the third direction Z.

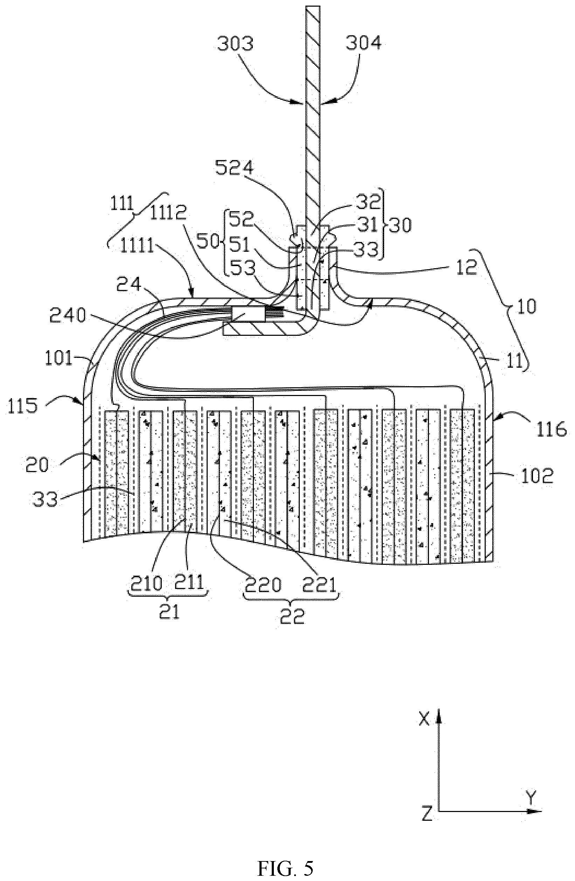

Referring to FIG. 5 together, the housing 10 includes a first housing 101 and a second housing 102 disposed opposite to each other in the second direction Y The first housing 101 includes a first portion 101a and a second portion 101b connected to each other. Three side edges of the second portion 101b are surrounded by the first portion 101a. The second housing 102 includes a third portion 102a and a fourth portion 102b connected to each other. Three side edges of the fourth portion 102b are surrounded by the third portion 102a. The first portion 101a is connected to the third portion 102a. The second portion 101b and the fourth portion 102b together form an accommodating space for accommodating the electrode assembly 20.

The housing 10 includes a body portion 11 and a connecting portion 12. The second portion 101b of the first housing 101 and the fourth portion 102b of the second housing 102 are connected to form the body portion 11. The first portion 101a of the first housing 101 and the third portion 102a of the second housing 102 are connected to form the connecting portion 12, where the connecting portion 12 is configured to seal the body portion 11. The electrode assembly 20 is disposed in the body portion 11. In some embodiments, the housing 10 may be a packaging bag obtained by using a packaging film for packaging, which means that the electrochemical apparatus 100 is a pouch battery. In other words, the connecting portion 12 is a sealing edge formed by packaging the first portion 101a and the third portion 102a. Both the first conductive plate 30 and the second conductive plate 40 are clamped in the connecting portion 12 and extend out of the housing 10 from an edge of the connecting portion 12.

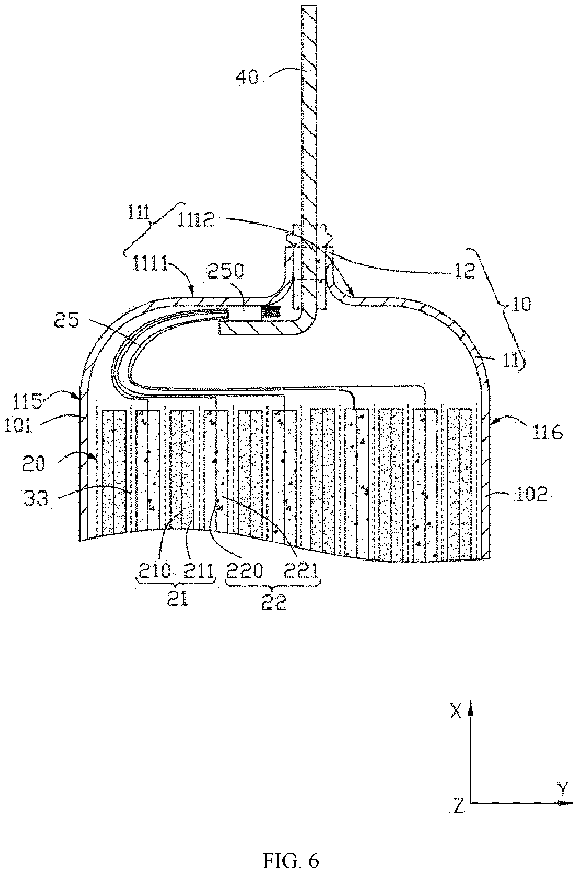

As shown in FIG. 1 to FIG. 3, in the first direction X, the body portion 11 includes a first end wall 111 and a second end wall 112 facing away from each other. In some embodiments, in the first direction X, the second portion 101b of the first housing 101 includes a first end face 1111 and a second end face 1121 facing away from each other, and the fourth portion 102b of the second housing 102 includes a third end face 1112 and a fourth end face 1122 facing away from each other. In the second direction Y, the first end face 1111 and the third end face 1112 are connected to form the first end wall 111, and the second end face 1121 and the fourth end face 1122 are connected to form the second end wall 112. In the third direction Z, the body portion 11 includes a first side wall 113 and a second side wall 114 facing away from each other. In some embodiments, in the third direction Z, the second portion 101b of the first housing 101 includes a first side surface 1131 and a second side surface 1141 facing away from each other, and the fourth portion 102b of the second housing 102 includes a third side surface 1132 and a fourth side surface 1142 facing away from each other. In the second direction Y, the first side surface 1131 and the third side surface 1132 are connected to form the first side wall 113, and the second side surface 1141 and the fourth side surface 1142 are connected to form the second side wall 114. In the second direction Y, the body portion 11 includes a third side wall 115 and a fourth side wall 116 facing away from each other. In some embodiments, the connecting portion 12 includes a first connecting region 12a, a second connecting region 12b, and a third connecting region 12c that are connected to each other. Viewed along the second direction Y, the first connecting region 12a of the connecting portion 12 is connected to the first end wall 111. In this case, both the first conductive plate 30 and the second conductive plate 40 are clamped in the first connecting region 12a and extend out of the housing 10 from an edge of the first connecting region 12a. Viewed along the second direction Y, the second connecting region 12b is connected to the first side wall 113, and the third connecting region 12c is connected to the second side wall 114. Further, viewed along the second direction Y, the housing 10 includes a first edge 121, where the first edge 121 is also an edge of the first connecting region 12a in the first direction X. The first conductive plate 30 and the second conductive plate 40 extend out of the housing 10 from the first edge 121. More specifically, the first end face 1111 and the third end face 1112 are located on two sides of the first connecting region 12a respectively. In the second direction Y, the first end face 1111 connects the first connecting region 12a and the third side face 115, and the third end face 1112 connects the first connecting region 12a and the fourth side face 116. Referring to FIG. 5 to FIG. 7 together, in some embodiments, in the second direction Y, a distance between the first connecting region 12a and the third side face 115 is greater than a distance between the first connecting region 12a and the fourth side face 116, which means that the first end face 1111 is a deep pit face and the third end face 1112 is a shallow pit face.

In some embodiments, the first connecting region 12a does not need to be bent, which means that a surface on which the first connecting region 12a is located may be substantially perpendicular to a surface on which the first end wall 111 is located. In this case, the first direction X is a direction in which the first conductive plate 30 extends out of the electrode assembly 20 (a direction in which the first conductive plate 30 protrudes out of the electrode assembly 20), and also a direction in which the first conductive plate 30 extends out of the first connecting region 12a. The second direction Y is a direction perpendicular to the first surface of the first conductive plate 30 located in the first connecting region 12a.

In some other embodiments, the first connecting region 12a may alternatively be bent to the first end wall 111, thereby reducing the size of the electrochemical apparatus 100 in the first direction X, increasing space utilization and energy density. When the first connecting region 12a is bent to the first end wall 111, the direction in which the first conductive plate 30 extends out of the first connecting region 12a changes. In this case, the first direction X is the direction in which the first conductive plate 30 protrudes out of the electrode assembly 20, and also the direction in which the first conductive plate 30 extends out of the first connecting region 12a when the first connecting region 12a is bent back to be perpendicular to the first end wall 111. The second direction Y is the direction perpendicular to the first surface of the first conductive plate 30 located in the first connecting region 12a when the first connecting region 12a is bent back to be perpendicular to the first end wall 111.

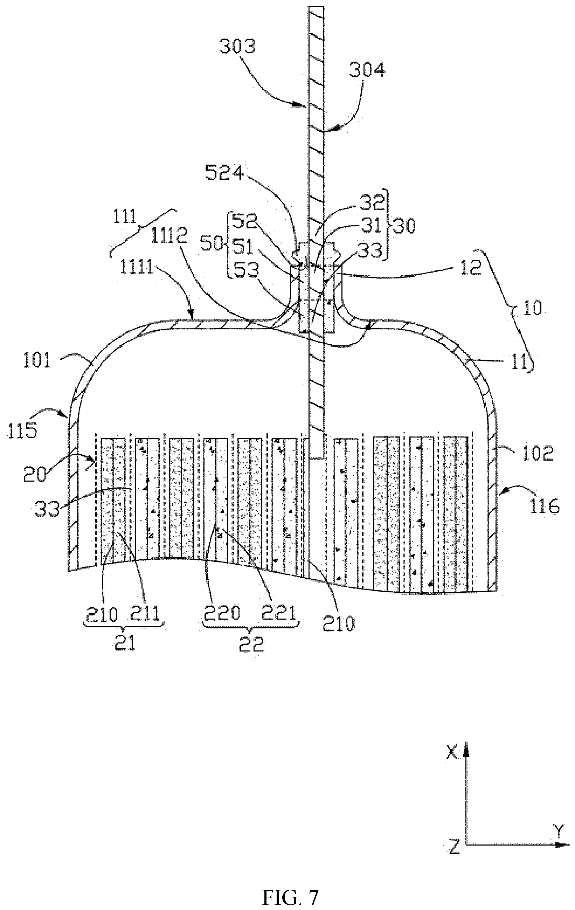

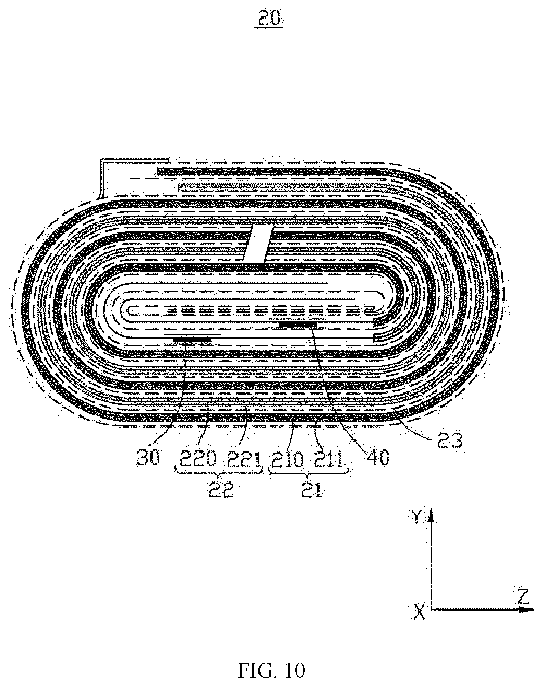

Referring to FIG. 5, FIG. 6, and FIG. 10 together, the electrode assembly 20 is a winding structure, and includes a first electrode plate 21, a second electrode plate 22, and a separator 23, where the separator 23 is disposed between the first electrode plate 21 and the second electrode plate 22. The first electrode plate 21, the separator 23, and the second electrode plate 22 are stacked sequentially and wound to form the electrode assembly 20. The first electrode plate 21 includes a first conductive layer 210 and a first conductive material layer 211 disposed on the first conductive layer 210. The second electrode plate 22 includes a second conductive layer 220 and a second conductive material layer 221 disposed on the second conductive layer 220. The electrode assembly 20 further includes a plurality of first tabs 24 and a plurality of second tabs 25. The plurality of first tabs 24 are electrically connected to the first conductive layer 210 at one end and electrically connected to the first conductive plate 30 at the other end. The second tabs 25 are electrically connected to the second conductive layer 220 at one end and electrically connected to the second conductive plate 40 at the other end. The plurality of first tabs 24 may be connected to the first conductive plate 30 via a first adapting portion 240. The plurality of second tabs 25 may also be connected to the second conductive plate 40 via a second adapting portion 250. In other embodiments, referring to FIG. 7, the difference from the electrode assembly 20 shown in FIG. 5 is that when the electrode assembly 20 is a winding structure, the electrode assembly 20 may not include the first tabs 24 and the second tabs 25. In this case, the first conductive plate 30 may be directly connected to the first conductive layer 210, and the second conductive plate 40 may also be directly connected to the second conductive layer 220. In some other embodiments, the electrode assembly 20 may alternatively be a laminated structure, that is, the first electrode plate 21, the separator 23, and the second electrode plate 22 are stacked sequentially to form the electrode assembly 20.

The first electrode plate 21 may be a positive electrode plate. Correspondingly, the first conductive layer 210 may be a positive electrode conductive layer, and the first conductive material layer 211 may be a positive electrode conductive material layer. The first conductive layer 210 may have the function of collecting current. The second electrode plate 22 may be a negative electrode plate. Correspondingly, the second conductive layer 220 may be a negative electrode conductive layer, and the second conductive material layer 221 may be a negative electrode active material layer. The second conductive layer 220 may have the function of collecting current.

The positive electrode conductive layer may be an aluminum foil or a nickel foil, and the negative electrode conductive layer may be at least one of a copper foil, a nickel foil, or a carbon-based conductive layer. The positive electrode conductive material layer includes a positive electrode active substance, and the positive electrode active substance includes a compound that reversibly intercalates and deintercalates lithium ions (that is, a lithiated intercalation compound). The negative electrode conductive material layer includes a negative electrode active substance, namely, a negative electrode active substance that can reversibly intercalate and deintercalate active ions. The separator 23 includes at least one of polyethylene, polypropylene, polyvinylidene fluoride, polyethylene glycol terephthalate, polyimide, or aramid.

As shown in FIG. 1 to FIG. 4 and FIG. 9A, the electrochemical apparatus 100 further includes a first layer 50, where the first layer 50 includes an insulating material. The first layer 50 can be used to sealedly connect the first conductive plate 30 and the housing 10, and can also electrically insulate the first conductive plate 30 from the housing 10. Specifically, the first layer 50 fills a gap that may be present between the first conductive plate 30 and the connecting portion 12, thereby sealedly connecting the first conductive plate 30 and the housing 10, and reducing the possibility of the first conductive plate 30 being separated from the connecting portion 12 during subsequent use. In some embodiments, the insulating material of the first layer 50 is at least one selected from polypropylene, polyethylene, polyethylene glycol terephthalate, polyethylene naphthalate, a polypropylene-modified material, or a polyethylene-modified material.

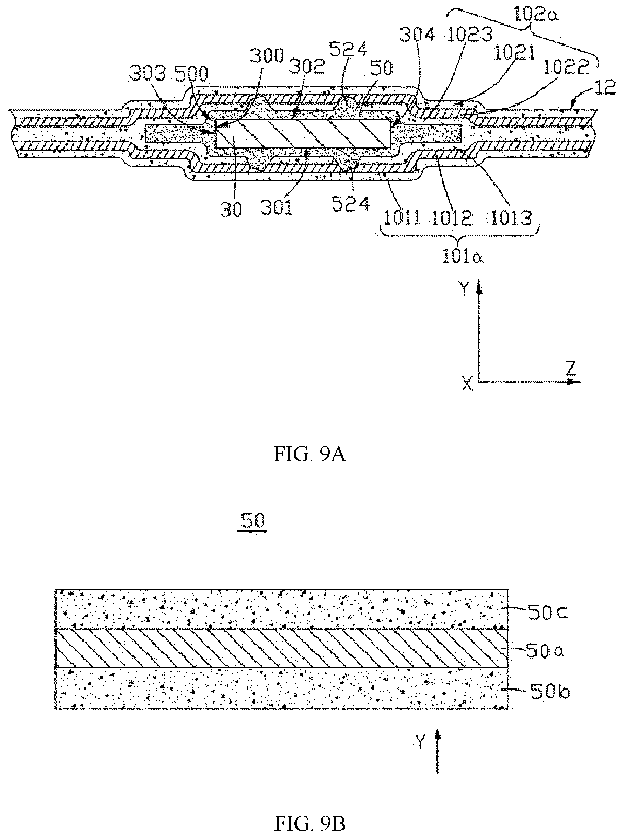

Referring to FIG. 9B, the first layer 50 may be formed by stacking one or more layers of materials along the second direction Y In some embodiments, the first layer 50 is formed by stacking three layers of materials, including a substrate 50a, a first adhesive layer 50b, and a second adhesive layer 50c. The substrate 50a is disposed between the first adhesive layer 50b and the second adhesive layer 50c. The materials of the substrate 50a, the first adhesive layer 50b, and the second adhesive layer 50c are each independently at least one selected from polypropylene, polyethylene, polyethylene glycol terephthalate, polyethylene naphthalate, a polypropylene-modified material, or a polyethylene-modified material. A melting point of the substrate 50a may be higher than a melting point of the first adhesive layer 50b, and may also be higher than a melting point of the second adhesive layer 50c. Referring to FIG. 9A and FIG. 9B, the first adhesive layer 50b is bonded to the first conductive plate 30 on one surface and bonded to the substrate 50a on the other surface. The second adhesive layer 50c has a welded portion with the first portion 101a of the first housing 101 or the third portion 102a of the second housing 102.

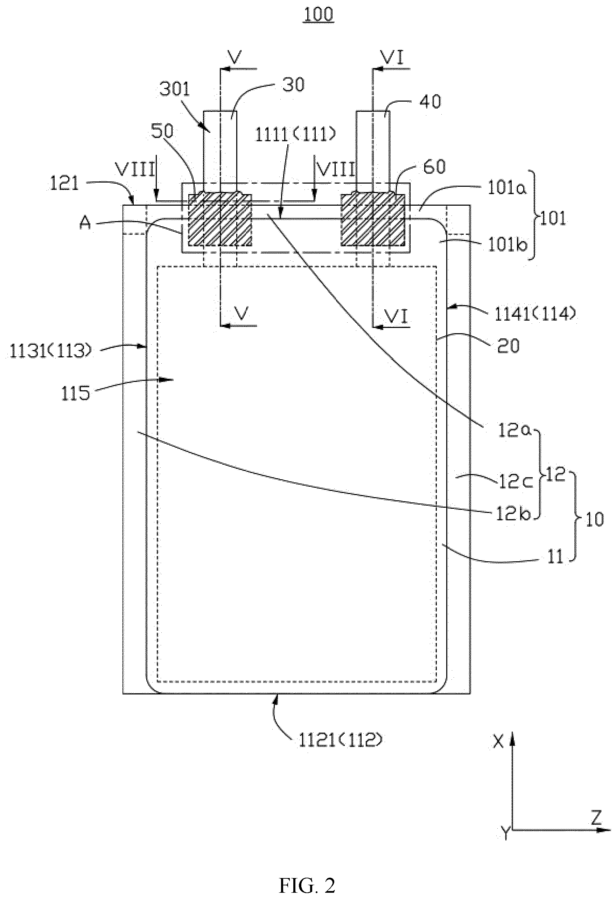

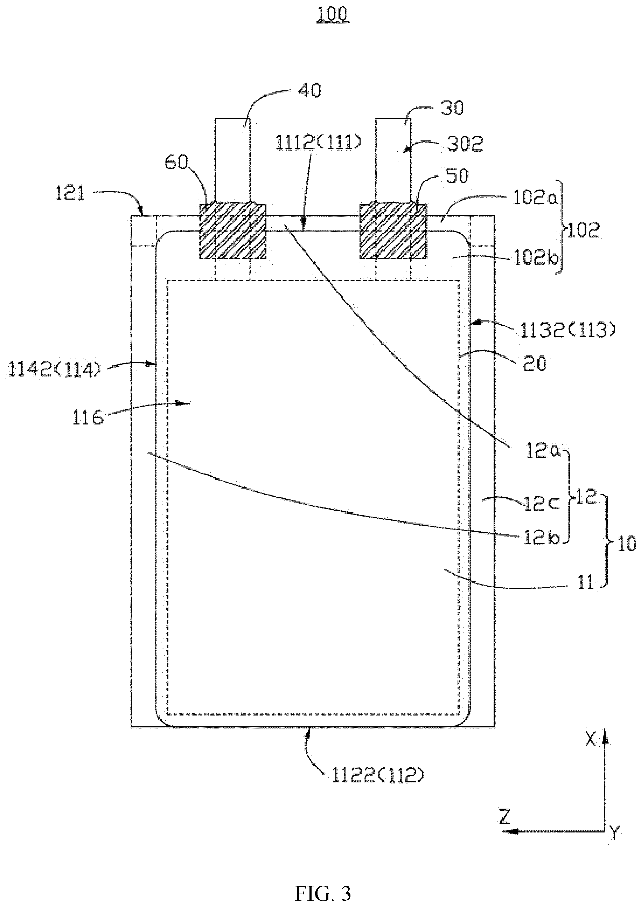

Referring to FIG. 9A, the first conductive plate 30 includes a first surface 301, a second surface 302, a first side face 303, and a second side face 304. In the second direction Y, the first surface 301 and the second surface 302 face away from each other. Referring to FIG. 2 and FIG. 3 together, the first surface 301 faces the first housing 101, and the second surface 302 faces the second housing 102. In the third direction Z, the first side face 303 and the second side face 304 face away from each other. The first side face 303 is connected between the first surface 301 and the second surface 302, and the second side face 304 is connected between the first surface 301 and the second surface 302. Four first included angle regions 300 are formed between the first surface 301 and the first side face 303, between the second surface 302 and the first side face 303, between the first surface 301 and the second side face 304, and between the second surface 302 and the second side face 304. In some embodiments, the first included angle region 300 may be substantially 90 degrees. The first layer 50 covers the first surface 301, second surface 302, first side face 303, and second side face 304 of the first conductive plate 30, thereby sealedly connecting the foregoing surfaces of the first conductive plate 30 and the housing 10. Therefore, viewed along a direction opposite to the first direction X, the first layer 50 includes four second included angle regions 500. The four second included angle regions 500 are connected to the four first included angle regions 300 of the first conductive plate 30 respectively.

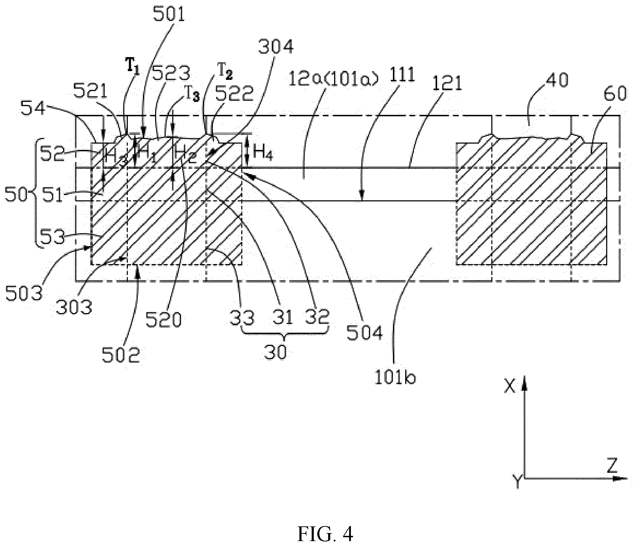

Referring to FIG. 4 and FIG. 5, the first conductive plate 30 includes a first conductive region 31, a second conductive region 32, and a third conductive region 33 that are connected to each other. The first conductive region 31 and the third conductive region 33 are located in the housing 10. In other words, viewed along the second direction Y, both the first conductive region 31 and the second conductive region 33 overlap the housing 10. For example, viewed along the second direction Y, the first conductive region 31 overlaps the first portion 101a, and the third conductive region 33 overlaps the second portion 101b. The first conductive region 31 is used to be electrically connected to the first tabs 24 of the electrode assembly 20. The second conductive region 32 extends out of the housing 10.

As shown in FIG. 4, in the first direction X, the first layer 50 includes a first region 51 and a second region 52 connected to each other. The first region 51 is disposed in the housing 10. Viewed along the second direction Y, the first edge 121 is disposed between the first region 51 and the second region 52, and the first edge 121 partially overlaps a dividing line between the first region 51 and the second region 52. In some embodiments, the first region 51 is clamped in the connecting portion 12. Referring to FIG. 2 together, the first region 51 is a region in the first layer 50 that has an orthographic projection in the second direction Y coinciding with the first portion 101a of the first housing 101 and that is clamped between the first portion 101a of the first housing 101 and the third portion 102a of the second housing 102 in the second direction Y. The second region 52 is disposed outside the housing 10. The second region 52 is a region in the first layer 50 that is connected to the first region 51 and that is farther away from the second portion 101b than the first portion 101a of the first housing 101 in the first direction X when viewed along the second direction Y. Viewed along the second direction Y, the first region 51 partially overlaps the first conductive plate 30, for example, the first region 51 may partially overlap the first conductive region 31 of the first conductive plate 30; and the second region 52 partially overlaps the first conductive plate 30, for example, the second region 52 may partially overlap the second conductive region 32 of the first conductive plate 30.

The first layer 50 may further include a third region 53. In the first direction X, the first region 51 is connected between the second region 52 and the third region 53. Referring to FIG. 2 and FIG. 4 together, the third region 53 is connected to the first region 51 in the first layer 50, and the third region 53 is disposed in the body portion 11. In other words, viewed along the second direction Y, the third region 53 is a region closer to the inside of the body portion 11 than the first portion 101a in the first direction X. Viewed along the second direction Y, the third region 53 partially overlaps the first conductive plate 30, for example, the third region 53 may partially overlap the third conductive region 33 of the first conductive plate 30. When a head applies pressure to the connecting portion 12, part of the first layer 50 may be extruded toward positions with less pressure on two sides after pressed, thereby forming the second region 52 and the third region 53.

As shown in FIG. 4, the second region 52 includes a first protrusion 521 and a second protrusion 522. Viewed along the second direction Y, the first protrusion 521 partially overlaps the first conductive plate 30 and protrudes along the first direction X, and the second protrusion 522 partially overlaps the first conductive plate 30 and protrudes along the first direction X. Referring to FIG. 4 and FIG. 9A together, the first protrusion 521 and the second protrusion 522 protrude from the second included angle region 500 along the first direction X. In the third direction Z, the first protrusion 521 is separated from the second protrusion 522. In the first direction X, the first protrusion 521 has an apex T₁ and the second protrusion 522 has an apex T. The apex T₁ is the farthest point of the first protrusion 521 from the first edge 121, and the apex T₂ is the farthest point of the second protrusion 522 from the first edge 121.

In the prior art, due to sudden change in thickness, the first layer has a relatively low sealing strength at a region (namely, the second included angle region) connected to the first included angle region of the first conductive plate, which is a position of transition from the insulating material to the metal material of the first conductive plate. When mechanical abuse occurs, the second included angle region is prone to stress concentration, which makes it possible for the first layer to be separated from the first conductive plate at the second included angle region, reducing the hermeticity, and resulting in electrolyte leakage or external moisture entering the inside of the housing, thereby affecting service life of the electrochemical apparatus. Further, due to the reduced hermeticity of the first layer, the moisture may cause an increased acid content inside the electrochemical apparatus after entering the housing, which accelerates dissolution of transition metal ions from lithium cobalt oxide (for example, accelerating dissolution of cobalt ions from lithium cobalt oxide of the positive electrode conductive layer), affecting storage performance and cycling performance of the electrochemical apparatus. In addition, the first conductive plate generates heat during charging, and especially during fast charging, the first conductive plate generates more heat. Because the second included angle region is in direct contact with the first conductive plate, the insulating material at the second included angle region deteriorates due to frequent temperature changes during long-term charging and discharging, making the second included angle region more prone to cracks or reduced hermeticity.

In this application, the first protrusion 521 and the second protrusion 522 are disposed on the first layer 50, such that when mechanical abuse occurs, stress generated by the first layer 50 at the second included angle region 500 can be dispersed along the extending direction of the first protrusion 521 and the second protrusion 522, which is conducive to reducing the possibility of the second included angle region 500 being separated from the first conductive plate 30, improving the hermeticity of the first layer 50, thereby improving the service life of the electrochemical apparatus 100. In addition, this is also conducive to reducing the possibility of dissolution of transition metal ions from the positive electrode conductive layer due to reduced hermeticity of the first layer 50 and moisture entering the housing 10, improving the storage performance and cycling performance of the electrochemical apparatus 100. Moreover, the first protrusion 521 and the second protrusion 522 increase a contact area between the first layer 50 and the first conductive plate 30, so when the first conductive plate 30 is charged to generate heat, the first protrusion 521 and the second protrusion 522 improve heat dissipation efficiency of the first layer 50, thereby alleviating deterioration of the first layer 50 due to frequent temperature changes, also helping improve the hermeticity of the first layer 50.

As shown in FIG. 4, in some embodiments, viewed along the second direction Y, in the first direction X, the apex T₁ of the first protrusion 521 overlaps the first side face 303, and the apex T₂ of the second protrusion 522 overlaps the second side face 304.

As shown in FIG. 4, in some embodiments, viewed along the second direction Y, the second region 52 further includes a third protrusion 523 disposed between the first protrusion 521 and the second protrusion 522, the third protrusion 523 protruding along the first direction X. Viewed along the second direction Y, a portion of the second region 52 overlapping the first conductive plate 30 is defined as an overlapping region 520. For example, the overlapping region 520 may be a portion of the second region 52 that overlaps the second conductive region 32 of the first conductive plate 30. The third protrusion 523 is located in the overlapping region 520. Viewed along the second direction Y, the overlapping region 520 is also a portion of the second region 52 that is disposed between the first side face 303 and the second side face 304 of the first conductive plate 30. The third protrusion 523 has an apex T₃, and the apex T₃ is the farthest point of the third protrusion 523 from the first edge 121. The third protrusion 523 disposed further increases the contact area between the first layer 50 and the first conductive plate 30, so when the first conductive plate 30 is charged to generate heat, the third protrusion 523 further improves the heat dissipation efficiency of the first layer 50, thereby alleviating deterioration of the first layer 50 due to frequent temperature changes, improving the hermeticity of the first layer 50. In some specific embodiments, the overlapping region 520 is provided in two. In the second direction Y, the two overlapping regions 520 are located on two sides of the first conductive plate 30 respectively. One overlapping region 520 is connected to the first surface 301 of the first conductive plate 30, and the other overlapping region 520 is connected to the second surface 302 of the first conductive plate 30. Each overlapping region 520 is provided with the third protrusion 523.

In some embodiments, the third protrusion 523 located on the first surface 301 may be provided in plurality, and the plurality of third protrusions 523 are connected to each other along the third direction Z. The third protrusion 523 located on the second surface 302 may also be provided in plurality, and the plurality of third protrusions 523 are connected to each other along the third direction Z.

In the first direction X, a distance from the first edge 121 to the apex T₁ of the first protrusion 521 is defined as a first distance H₁, and a distance from the first edge 121 to the apex T₃ of the third protrusion 523 is defined as a second distance H₂, where in some embodiments, the first distance H₁ is greater than the second distance H₂ (H₁ > H₂). It can be understood that when the third protrusion 523 located on the first surface 301 (or the second surface 302) is provided in plurality, the second distance H₂ may be the maximum of the distances from the first edge 121 to the apexes T₃ of the plurality of third protrusions 523. If the third protrusion 523 extends by a large distance, it indicates that a large portion of the first region 51 connected to the first surface 301 or the second surface 302 of the first conductive plate 30 is extruded out of the connecting portion 12, correspondingly causing small thickness of the first region 51 connected to the surface of the first conductive plate 30, and a small sealing strength of the first layer 50. Therefore, in this application, H₁ being set to be greater than H₂ makes the first protrusion 521 well disperse the stress and improve the heat dissipation effect, and reduces influence on the sealing strength of the first layer 50. Moreover, this is also conducive to reducing influence of the first layer 50 on the energy density of the electrochemical apparatus 100. In addition, a fourth distance H₄ from the first edge 121 to the apex Tz of the second protrusion 522 may also be limited to be greater than the second distance H₂.

As shown in FIG. 4, in some embodiments, viewed along the second direction Y, the first layer 50 includes a first end edge 501, a second end edge 502, a third end edge 503, and a fourth end edge 504. In the first direction X, the first end edge 501 and the second end edge 502 face away from each other. Viewed along the second direction Y, the first end edge 501 is located on a side of the first edge 121 away from the first portion 101a, and the second end edge 502 overlaps the first portion 101. In the third direction Z, the third end edge 503 and the fourth end edge 504 face away from each other, and the fourth end edge 504 is an edge of the first layer 50 closer to the second conductive plate 40. Both the third end edge 503 and the fourth end edge 504 extend along the first direction X. Viewed along the second direction Y, the first protrusion 521, the second protrusion 522, and the third protrusion 523 are all formed on the first end edge 501.

The first end edge 501 includes a second edge 54, where the second edge 54 extends along the third direction Z. In the third direction Z, the first protrusion 521 is disposed between the second edge 54 and the second protrusion 522. In some embodiments, in the third direction Z, the second edge 54, the first protrusion 521, the third protrusion 523, and the second protrusion 522 are connected sequentially. In the first direction X, a distance from the first edge 121 to the second edge 54 is defined as a third distance H₃, the first distance H₁ being greater than the third distance H₃ (H₁ > H₃). H₁ being limited to be greater than H₃ makes the first protrusion 521 well disperse the stress and improve the heat dissipation effect, and reduces the possibility of small thickness of the first region 51 connected to the side face of the first conductive plate 30 and reduced hermeticity correspondingly caused by the first edge 121 extending by a large distance. Moreover, this is also conducive to reducing influence of the first layer 50 on the energy density of the electrochemical apparatus 100.

Further, the second distance H₂ is greater than the third distance H₃ (H₂ > H₃).

In some embodiments, the third distance H₃ ranges from 0.2 mm to 3.5 mm, and a ratio of the first distance H₁ to the third distance H₃ ranges from 1.09 to 16. In this application, limiting the range of the third distance H₃ reduces the possibility of reduced hermeticity of the first layer 50 caused by the first edge 121 extending by a small distance (insufficient pressure applied to the first layer 50 by the sealing head), and reduces influence on the hermeticity of the first layer 50 when the first edge 121 extends by a large distance. In addition, it can be understood that if the first conductive plate 30 exposed from the housing 10 needs to be bent toward the first end wall 111 (for example, to facilitate connecting the first conductive plate 30 to an external element), when the first edge extends by a large distance, the first layer needs to be bent along with the first conductive plate, and stress concentration may occur at the bending position in the case of mechanical abuse, increasing the possibility of breakage of the first layer. Therefore, limiting an upper limit of H₃ can also reduce the possibility of breakage of the first layer 50 after bent. In addition, in this application, limiting the range of the ratio of the first distance H₁ to the third distance H₃ alleviates the problem of reduced stress dispersion effect and heat dissipation effect when H₁ is small, and reduces influence on the energy density of the electrochemical apparatus 100 when H₁ is large.

In some specific embodiments, the first distance H₁ ranges from 3 mm to 4.5 mm. The second distance H₂ ranges from 2.3 mm to 3 mm. The third distance H₃ ranges from 1.8 mm to 2.5 mm.

Similarly, a ratio of the fourth distance H₄ to the third distance H₃ may be set in the range of 1.09 to 16. In some specific embodiments, the fourth distance H₄ ranges from 3 mm to 4.5 mm.

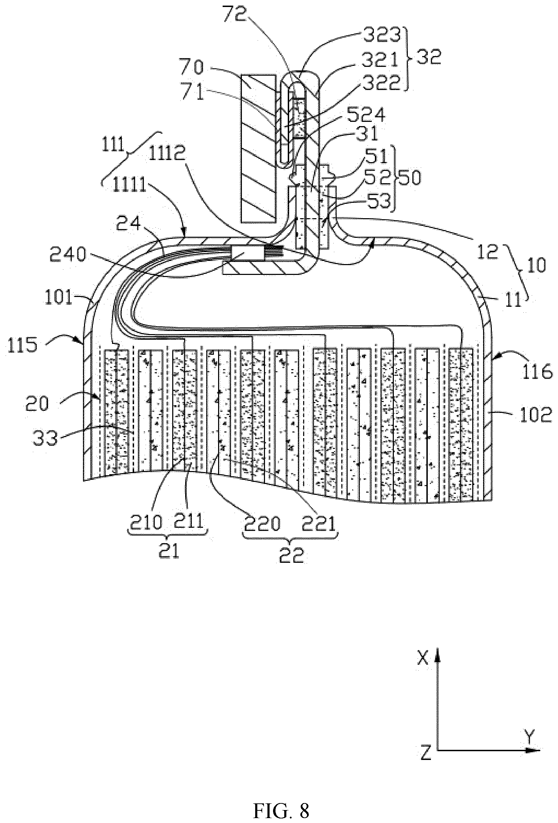

As shown in FIG. 8, in some embodiments, the electrochemical apparatus 100 further includes a circuit board 70 electrically connected to the first conductive plate 30 and the second conductive plate 40. Specifically, the third conductive region 33 of the first conductive plate 30 exposed from the housing 10 is bent toward a first end face 1111 of the first end wall 111, to form a first segment 331 and a second segment 332 disposed opposite to each other in the second direction Y, and a third segment 333 connected between the first segment 331 and the second segment 332. The first segment 331 is connected to the first conductive region 31. The circuit board 70 is disposed on the first end face 1111. The circuit board 70 is provided with a first electrically connecting member 71 and a second electrically connecting member (not shown in the figure). The circuit board 70 is connected to the second segment 332 of the third conductive region 33 via the first electrically connecting member 71. Similarly, a region of the second conductive plate 40 exposed from the housing 10 may also be bent toward the first end face 1111 and connected to the second electrically connecting member. The first electrically connecting member 71 and the second electrically connecting member may be nickel sheets.

Further, to reduce the possibility of the third conductive region 33 opening up along a direction opposite to the bending direction, a bonding member 72 may also be disposed between the first segment 331 and the second segment 332. Two opposite surfaces of the bonding member 72 in the second direction Y are bonded to the first segment 331 and the second segment 332 respectively.

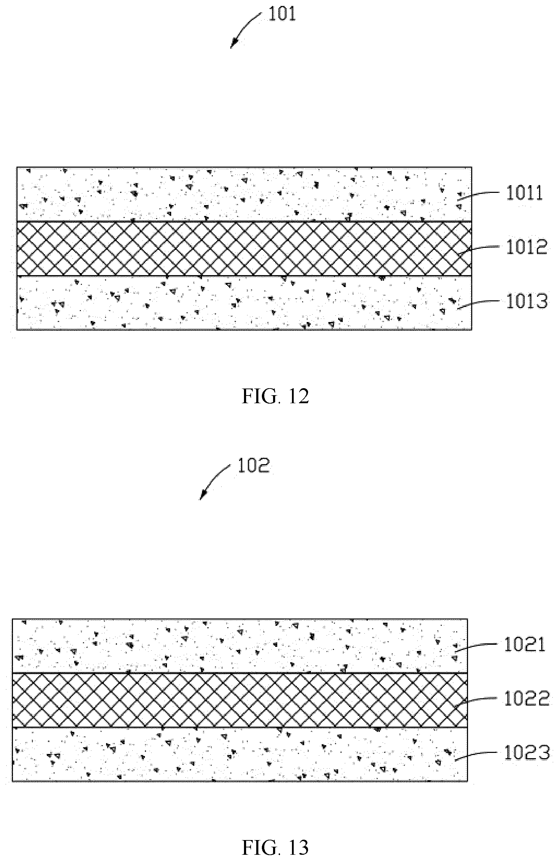

In some embodiments, materials of both the first housing 101 and the second housing 102 may be multi-layer sheets. As shown in FIG. 12, the first housing 101 may include a first protective layer 1011, a first metal layer 1012, and a first polymer layer 1013 stacked sequentially. Compared with the first protective layer 1011, the first polymer layer 1013 is closer to the electrode assembly 20. A material of the first protective layer 1011 may be polymer resin, which can be used to protect the first metal layer 1012, reduce the possibility of damage of the first metal layer 1012 due to an external force, delay air infiltration from an external environment, and maintain a normal operating environment inside the electrochemical apparatus 100. In some embodiments, the material of the first protective layer 1011 may be at least one selected from ethylene glycol terephthalate, polybutylene terephthalate, polyvinylidene fluoride, polytetrafluoroethylene, polypropylene, polyamide, or polyimide. The first metal layer 1012 can be used to delay water infiltration from the external environment, and reduce damage to the electrode assembly 20 due to the external force. In some embodiments, the first metal layer 1012 may be an aluminum foil layer or a steel foil layer. The first polymer layer 1013, with the property of being melted by heating, can be used for sealing, and can reduce the possibility of the multi-layer sheets being dissolved or swelled by an organic solvent in the electrolyte. The first polymer layer 1013 can also be used to reduce the possibility of corrosion of the metal layer caused by an electrolytic salt in the electrolyte coming into contact with the first metal layer 1012. In some embodiments, the first polymer layer 1013 includes a polymer material, and the polymer material may be at least one selected from polypropylene, propylene copolymer, polyethylene, or polymethyl methacrylate.

As shown in FIG. 13, the second housing 102 may include a second protective layer 1021, a second metal layer 1022, and a second polymer layer 1023 stacked sequentially. It can be understood that when the first housing 101 and the second housing 102 may be obtained by folding a packaging film, the materials of the second protective layer 1021, the second metal layer 1022, and the second polymer layer 1023 are exactly the same as the materials of the first protective layer 1011, the first metal layer 1012, and the first polymer layer 1013 respectively. Details are not described herein again.

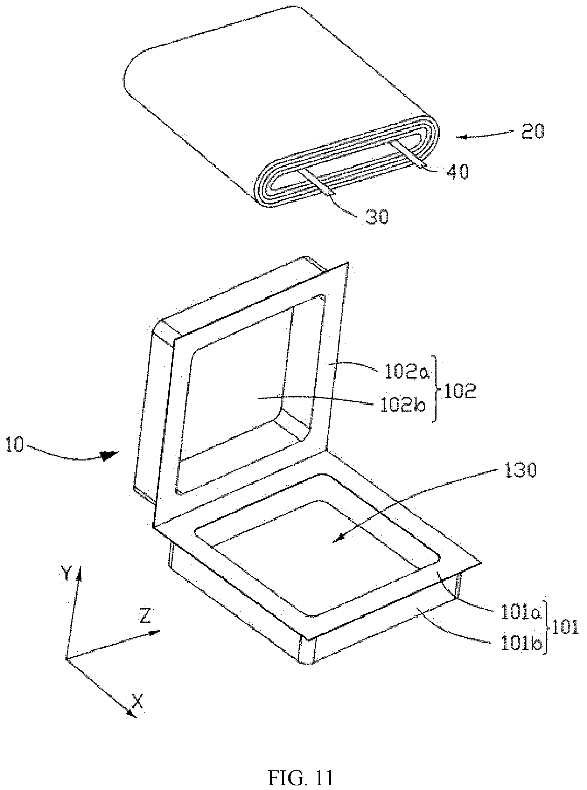

Referring to FIG. 11 to FIG. 13 together, during manufacturing of the housing 10, a head of a packaging device can be used to simultaneously apply certain temperature and pressure to the first portion 101a of the first housing 101 and the third portion 102a of the second housing 102, such that the first polymer layer 1013 and the second polymer layer 1023 are fused and bonded together to form the connecting portion 12. The first layer 50 is disposed between the first polymer layer 1013 and the second polymer layer 1023, and is fused and bonded to the first polymer layer 1013 and the second polymer layer 1023 when sealed. In some embodiments, when the first layer 50 is formed by stacking three layers of materials, the second adhesive layer 50c of the first layer 50 is fused and bonded to the first polymer layer 1013 and the second polymer layer 1023 when sealed. When the connecting portion 12 is formed by sealing, the head applies larger pressure to the connecting portion 12, such that part of the first layer 50 is extruded toward positions with less pressure after pressed, thereby forming the second region 52 and the third region 53. The first layer 50 fills the gap that may be present between the first conductive plate 30 and the connecting portion 12, reducing the possibility of the first conductive plate 30 being separated from the connecting portion 12 during subsequent use. In addition, because the materials of the first layer 50, the first polymer layer 1013, and the second polymer layer 1023 are all polymers, with similar melting points, they can be well bonded in a high-temperature and pressurized environment, improving the hermeticity. The first layer 50 can also improve the electrical insulation performance between the first conductive plate 30 and the first metal layer 1012 and second metal layer 1022, reducing the possibility of short circuit caused by contact between the three.

Still referring to FIG. 8 and FIG. 9A, in some embodiments, the overlapping region 520 may further include a fourth protrusion 524, the fourth protrusion 524 protruding along the second direction Y In the first direction X, the fourth protrusion 524 is located on a side of the first edge 121 to cover an exposed edge of the first edge 121. Therefore, when the third conductive region 33 of the first conductive plate 30 needs to be bent toward the first end wall 111, the fourth protrusion 524 can reduce the possibility of short circuit or corrosion caused by direct contact between the first conductive plate 30 and the metal layer exposed from the edge of the first edge 121.

As shown in FIG. 1 to FIG. 4, in some embodiments, the electrochemical apparatus 100 may further include a second layer 60, where the second layer 60 includes an insulating material. The second layer 60 can be used to sealedly connect the second conductive plate 40 and the housing 10, and can also electrically insulate the second conductive plate 40 from the housing 10. The second layer 60 may also be designed to be similar to the first layer 50, that is, protrusions are disposed on the second layer 60, thereby further improving the hermeticity. Details are not described herein again.

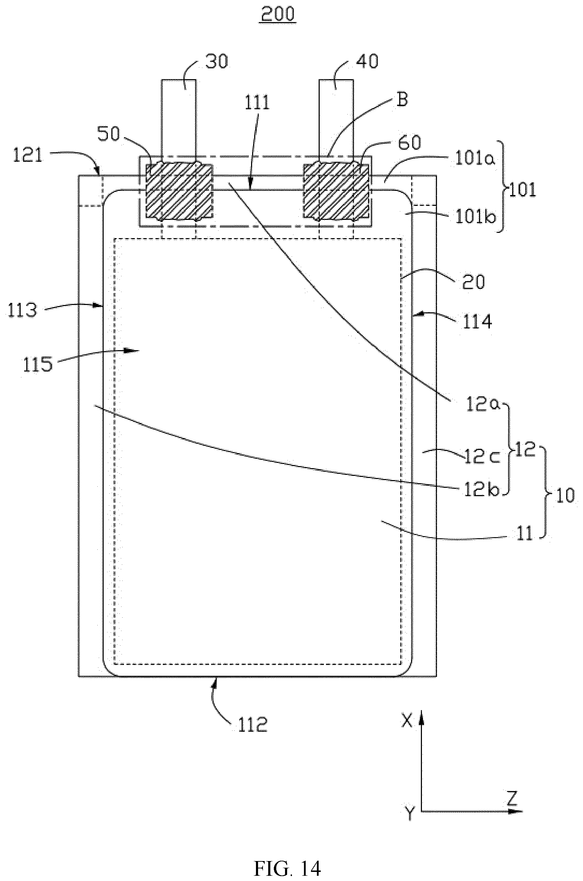

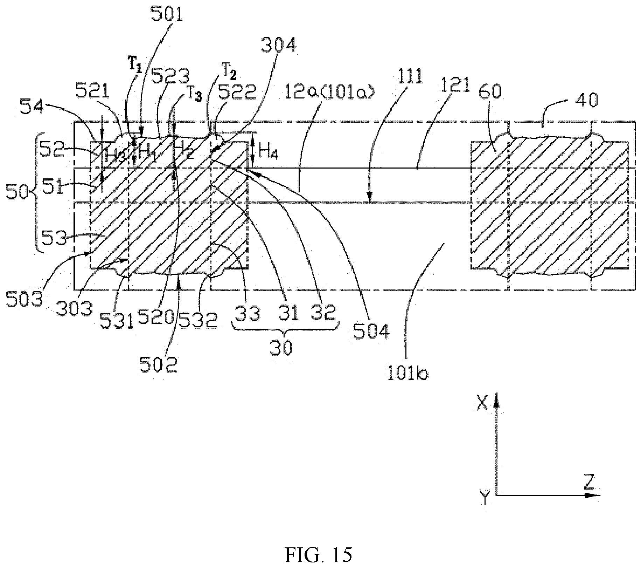

Referring to FIG. 14 and FIG. 15, another embodiment of this application further provides an electrochemical apparatus 200. The difference from the electrochemical apparatus 100 is that the third region 53 includes a fifth protrusion 531 and a sixth protrusion 532. Viewed along the second direction Y, the fifth protrusion 531 partially overlaps the first conductive plate 30 and protrudes along a direction opposite to the first direction X, and the sixth protrusion 532 partially overlaps the first conductive plate 300 and protrudes along a direction opposite to the first direction X. In some specific embodiments, the fifth protrusion 531 is provided in two, and the sixth protrusion 532 is also provided in two. The two fifth protrusions 531 and the two sixth protrusions 532 protrude from the four second included angle regions 500 along the direction opposite to the first direction X respectively. In the third direction Z, the fifth protrusion 531 is separated from the sixth protrusion 532.

Therefore, when mechanical abuse occurs, stress generated by the first layer 50 at the second included angle region 500 can also be dispersed along the extending direction of the fifth protrusion 531 and the sixth protrusion 532, which is not only conducive to reducing the possibility of the second included angle region 500 being separated from the first conductive plate 30, improving the hermeticity of the first layer 50, but also conducive to reducing the possibility of breakage of the first conductive plate 30 caused by the stress being transferred to the first conductive plate 30, improving the service life of the electrochemical apparatus 200. In addition, the fifth protrusion 531 and the sixth protrusion 532 also improve the heat dissipation efficiency of the first layer 50, thereby improving the hermeticity of the first layer 50.

The electrochemical apparatus 100 (or the electrochemical apparatus 200) of this application includes all apparatuses in which electrochemical reactions can take place. Specifically, the electrochemical apparatus 100 includes all kinds of primary batteries, secondary batteries, fuel batteries, solar batteries, and capacitors (for example, super capacitors). Optionally, the electrochemical apparatus 100 may be a lithium secondary battery, including a lithium metal secondary battery, a lithium-ion secondary battery, a lithium polymer secondary battery, and a lithium-ion polymer secondary battery.

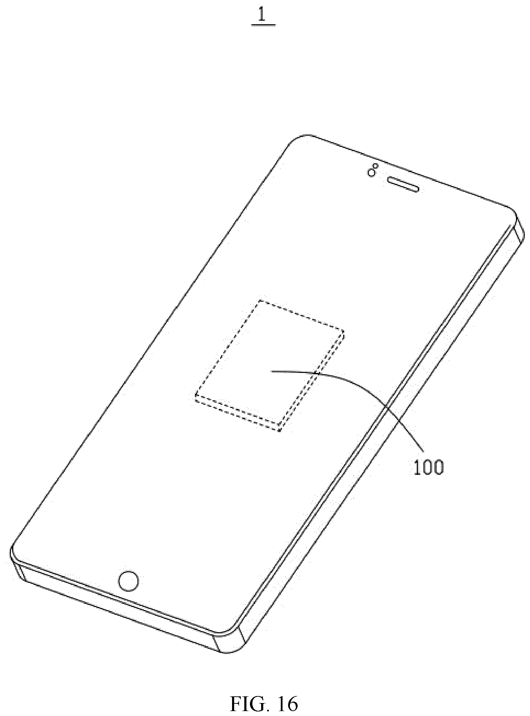

Referring to FIG. 16, an embodiment of this application further provides an electronic apparatus 1. The electronic apparatus 1 includes the electrochemical apparatus 100 (or the electrochemical apparatus 200).

The electrochemical apparatus 100 of this application is applicable to the electronic apparatus 1 in various fields. In an embodiment, the electronic apparatus 1 of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

Specific examples and comparative examples below are used to describe this application in detail. This application is described by using an example in which the electrochemical apparatus is a pouch battery and with reference to specific preparation procedures and test methods. Persons skilled in the art should understand that a preparation method described in this application is only an example, and that all other suitable preparation methods fall within the scope of this application.

### Example 1

(1) Preparation of negative electrode plate: Negative electrode active material artificial graphite, conductive carbon black (Super P), and styrene-butadiene rubber (SBR) were mixed at a mass ratio of 96:1.5:2.5, then deionized water was added as solvent to obtain a slurry with a weight percentage of 70wt%, and the slurry was stirred to uniformity. The slurry was uniformly applied onto one surface of a 10 µm thick negative electrode current collector copper foil, and dried at 110°C, to obtain a negative electrode plate coated with a negative electrode active material layer on one surface, where a coating thickness of the negative electrode active material layer was 150 µm. The foregoing step was repeated on another surface of the negative electrode plate to obtain a negative electrode plate coated with the negative electrode active material layers on two surfaces. The negative electrode plate included a negative electrode tab, and the negative electrode tab was nickel (Ni).
(2) Preparation of positive electrode plate: Positive electrode active material lithium cobalt oxide (LiCoO₂), conductive carbon black (Super P), and polyvinylidene fluoride (PVDF) were mixed at a mass ratio of 97.5:1.0:1.5, then N-methylpyrrolidone (NMP) was added as solvent to obtain a slurry with a solid content of 75wt%, and the slurry was stirred to uniformity. The slurry was uniformly applied onto one surface of a 12 µm thick positive electrode current collector aluminum foil, and dried at 90°C, to obtain a positive electrode plate with a 100 µm thick positive electrode active material layer. The foregoing step was repeated on the other surface of the positive electrode current collector aluminum foil to obtain a positive electrode plate coated with the positive electrode active material layers on two surfaces. The positive electrode plate included a positive electrode tab, and the positive electrode tab was aluminum (Al).
(3) Preparation of electrolyte: In a dry argon atmosphere, first, organic solvents ethylene carbonate (EC), ethyl methyl carbonate (EMC), and diethyl carbonate (DEC) were mixed at a mass ratio of EC:EMC:DEC = 30:50:20, and then lithium salt lithium hexafluorophosphate (LiPF₆) was added into the organic solvents for dissolving and mixing to uniformity, to obtain an electrolyte with a concentration of the lithium salt being 1.15 mol/L.
(4) Manufacturing of battery: A first layer was connected to a first conductive plate, a second layer was connected to a second conductive plate, and then the first conductive plate and the second conductive plate were welded to a first tab and a second tab respectively. Orders of the bonding process and the welding process can be exchanged. Next, the first electrode plate, the separator, and the second electrode plate were stacked sequentially and wound to obtain an electrode assembly, where a 15 µm thick polyethylene (PE) film was selected as the separator. Then, electrolyte injection, formation, and packaging were performed to obtain a battery with a size of 5.40 mm × 94 mm × 90 mm, and regions of the first conductive plate and the second conductive plate extending out of the housing were bent and connected to a circuit board. After packaging, viewed along a second direction, a first protrusion and a second protrusion that partially overlapped the first conductive plate were formed on the first layer, and a second region of the first layer further included a third protrusion disposed between the first protrusion and the second protrusion. For values of H₁, H₂, and H₃ and a ratio of H₁/H₃, refer to Table 1.

### Comparative Example 1

The difference from Example 1 is that viewed along the second direction, the first protrusion and the second protrusion that partially overlapped the first conductive plate were not formed on the first layer, and the third protrusion located between the first protrusion and the second protrusion was not formed either.

### Comparative Examples 2 and 3 and Examples 2 to 5

The difference from Example 1 is the values of H₁, H₂, and H₃ and the ratio of H₁/H₃.

Then, drop test, drop and high-temperature and high-humidity test, high rate charge and discharge test, and cobalt dissolution rate test were performed on the batteries in the examples and comparative examples separately. 100 batteries were taken from each example and each comparative example for testing, and the corresponding test results were recorded in Table 1.

Steps of the drop test: (1) In a 25°C environment, voltage of the battery was adjusted to 100% SOC (State of Charge, state of charge). (2) The battery was put into a fixture compartment, and an automatic drop device was used to drop the battery from a position of 1.8 m to a steel plate at an angle of 45 ± 15 degrees, sequentially with a bottom face, a left side face, a right side face, a front face, a back face, and a top face of the battery facing the steel plate as one round. The drops totaled 14 rounds, that is, 84 drops. (3) After the drops were completed, the battery was checked, and if no electrolyte leakage occurred in the connecting region between the first layer and the first conductive plate, and no crack or breakage occurred in the region of the first layer exposed from the housing, it was determined that the battery passed the test.

Steps of the drop and high-temperature and high-humidity test: (1) In a 25°C environment, voltage of the battery was adjusted to 100% SOC (State of Charge, state of charge). (2) After the drops were completed, the battery was put into a fixture compartment, and an automatic drop device was used to drop the battery from a position of 1.8 m to a steel plate at an angle of 45 ± 15 degrees, sequentially with a bottom face, a left side face, a right side face, a front face, a back face, and a top face of the battery facing the steel plate as one round. The drops totaled 14 rounds, that is, 84 drops. (3) The battery was put into a heating oven and stored for 30 days, with temperature of 65°C and relative humidity of 90% in the oven. (4) The battery was taken out and checked, and if no electrolyte leakage occurred in the connecting region between the first layer and the first conductive plate, it was determined that the battery passed the test.

Steps of the high rate charge and discharge test: (1) The battery was charged to 4.15 V at a constant current of 10.0C, and then charged to 8C at a constant voltage. (2) The battery was charged to 4.35 V at a constant current of 8.0C, and then charged to 6C at a constant voltage. (3) The battery was charged to 4.45 V at a constant current of 6.0C, and then charged to 1C at a constant voltage. (4) The battery was charged to 4.5 V at a constant current of 1.0C, and then charged to 0.05C at a constant voltage. (5) The battery was discharged to a voltage of 3.0 V at 2C. (6) During cycling, the battery was discharged at the 100th, 500th, and 1000th cycles. The battery was checked, and if no electrolyte leakage occurred in the connecting region between the first layer and the first conductive plate, it was determined that the battery passed the test.

Steps of the cobalt dissolution amount test: (1) After the battery completed the 1000th discharge, the battery was centrifuged. (2) The liquid obtained after centrifugation was subjected to an ICP (Inductive Coupled Plasma Emission Spectrometer, inductive coupled plasma emission spectrometer) test to obtain the cobalt content in the electrolyte, so as to characterize the cobalt dissolution amount of lithium cobalt oxide in the positive electrode plate.

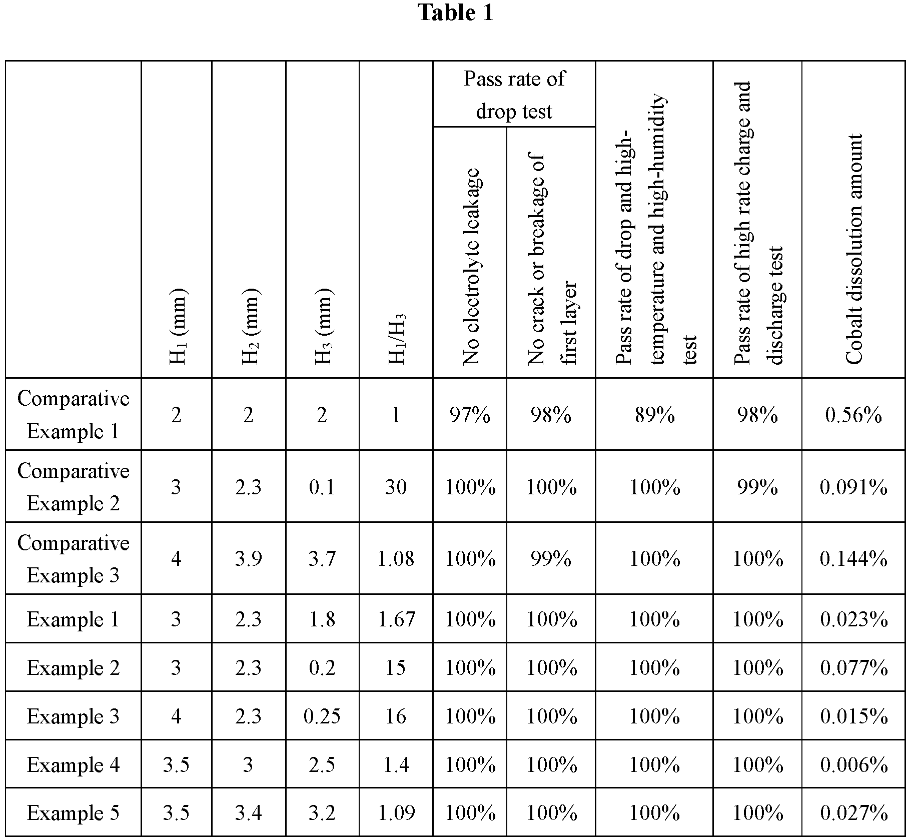

It can be learned from data in Table 1 that as compared with Comparative Example 1, because the first layer in Example 1 is provided with the first protrusion, the second protrusion, and the third protrusion, the first layer has improved hermeticity, resulting in higher pass rates of the battery in Example 1 in the drop test, the drop and high-temperature and high-humidity test, and the high rate charge and discharge test, and a lower cobalt ion dissolution amount after long-term cycling.

When the first layer is provided with the first protrusion, the second protrusion, and the third protrusion, the value of H₃ and the ratio of H₁/H₃ further affect the hermeticity of the first layer. As compared with Example 2, in Comparative Example 2, H₃ is excessively small and the ratio of H₁/H₃ is excessively large, so the hermeticity of the first layer is relatively reduced, the pass rate of the high rate charge and discharge test after long-term cycling is decreased, and the cobalt ion dissolution amount is relatively increased. In Comparative Example 3, H₃ is excessively large and the ratio of H₁/H₃ is excessively small, so the first layer is more prone to stress concentration at the bending position of the first conductive plate, resulting in an increased percentage of crack or breakage.

As compared with Example 4, in Comparative Example 5, the ratio of H₁/H₃ is excessively large, so the hermeticity of the first layer is relatively reduced, the pass rate of the high rate charge and discharge test is decreased, and the cobalt ion dissolution amount after long-term cycling is relatively increased. In Examples 3 to 5, H₃ and the ratio of H₁/H₃ satisfy the predetermined conditions, so the pass rates of the battery in the drop test, the drop and high-temperature and high-humidity test, and the high rate charge and discharge test are high, and the cobalt ion dissolution amount after long-term cycling is low.

In conclusion, it should be noted that the foregoing embodiments are merely intended to describe the technical solutions of this application, but not intended to constitute any limitation. Although this application is described in detail with reference to preferred embodiments, persons of ordinary skill in the art should understand that modifications or equivalent replacements can be made to the technical solutions of this application, without departing from the spirit and scope of the technical solutions of this application.

## Claims

1. An electrochemical apparatus, comprising a housing, an electrode assembly and a first conductive plate; the electrode assembly being disposed in the housing, and the first conductive plate being electrically connected to the electrode assembly and extending out from the housing; **characterized in that**
the electrochemical apparatus further comprises a first layer; wherein an extending direction of the first conductive plate is a first direction, and in the first direction, the first layer comprises a first region and a second region connected to each other, the first region being disposed inside the housing, and the second region being disposed outside the housing; a direction perpendicular to a surface of the first conductive plate is defined as a second direction, and viewed along the second direction, the second region partially overlaps the first conductive plate; and the first layer comprises an insulating material;
the second region comprises a first protrusion and a second protrusion; wherein viewed along the second direction, the first protrusion partially overlaps the first conductive plate and protrudes along the first direction, and the second protrusion partially overlaps the first conductive plate and protrudes along the first direction; a third direction, the first direction, and the second direction are perpendicular to each other; and in the third direction, the first protrusion is separated from the second protrusion.

2. The electrochemical apparatus according to claim 1, wherein viewed along the second direction, the second region further comprises a third protrusion disposed between the first protrusion and the second protrusion, the third protrusion protruding along the first direction.

3. The electrochemical apparatus according to claim 2, wherein viewed along the second direction, the housing comprises a first edge disposed between the first region and the second region; wherein in the first direction, a distance from the first edge to an apex of the first protrusion is a first distance, and a distance from the first edge to an apex of the third protrusion is a second distance, the first distance being greater than the second distance.

4. The electrochemical apparatus according to claim 2, wherein the third protrusion is provided in plurality.

5. The electrochemical apparatus according to claim 1, wherein viewed along the second direction, a portion of the second region overlapping the first conductive plate is an overlapping region, wherein the overlapping region comprises a fourth protrusion, the fourth protrusion protruding along the second direction.

6. The electrochemical apparatus according to claim 3, wherein the first layer comprises a second edge, the second edge extending along the third direction; and in the third direction, the first protrusion is disposed between the second edge and the second protrusion; and
in the first direction, a distance from the first edge to the second edge is a third distance, the first distance being greater than the third distance.

7. The electrochemical apparatus according to claim 6, wherein the second distance is greater than the third distance.

8. The electrochemical apparatus according to claim 6, wherein the third distance ranges from 0.2 mm to 3.5 mm, and a ratio of the first distance to the third distance ranges from 1.09 to 16.

9. The electrochemical apparatus according to claim 1, wherein viewed along the second direction, the first conductive plate comprises a first side face and a second side face facing away from each other; wherein in the first direction, the apex of the first protrusion overlaps the first side face, and the apex of the second protrusion overlaps the second side face.

10. The electrochemical apparatus according to claim 1, wherein the housing comprises a body portion and a connecting portion connected to the body portion; wherein the connecting portion is configured to seal the body portion, the electrode assembly is disposed in the body portion, the first conductive plate is electrically connected to the electrode assembly and extends from the connecting portion, and the first region connects the first conductive plate and the connecting portion.

11. The electrochemical apparatus according to claim 10, wherein the housing comprises a first housing and a second housing disposed opposite to each other, wherein the first housing comprises a first polymer layer, the second housing comprises a second polymer layer, and the first polymer layer and the second polymer layer are bonded to each other to form the connecting portion.

12. The electrochemical apparatus according to claim 10, wherein the first polymer layer comprises a first polymer material, the second polymer layer comprises a second polymer material; and the first polymer material and the second polymer material are each independently at least one selected from polypropylene, propylene copolymer, polyethylene, or polymethyl methacrylate.

13. The electrochemical apparatus according to claim 1, wherein the first layer further comprises a third region; wherein in the first direction, the first region is connected between the second region and the third region, and the third region is disposed in the body portion; the third region comprises a fifth protrusion and a sixth protrusion; wherein viewed along the second direction, the fifth protrusion partially overlaps the first conductive plate and protrudes along a direction opposite to the first direction, and the sixth protrusion partially overlaps the first conductive plate and protrudes along a direction opposite to the first direction; and in the third direction, the fifth protrusion is separated from the sixth protrusion.

14. The electrochemical apparatus according to claim 1, wherein the insulating material is at least one selected from polypropylene, polyethylene, polyethylene glycol terephthalate, polyethylene naphthalate, a polypropylene-modified material, or a polyethylene-modified material.

15. An electronic apparatus comprising the electrochemical apparatus according to any one of claims 1 to 14.
